# EUROPEAN PATENT APPLICATION

(11) **EP 1 760 573 A2**
(43) Date of publication of application: **07.03.2007**
(21) Application number: 06017340.8
(22) Date of filing: 21.08.2006
(51) Int. Cl.: G06F 3/048

(54) **Apparatus and method for controlling user interface using jog dial and navigation key**

(30) Priority: 30.08.2005 KR 20050080332
(71) Applicant: Samsung Electronics Co., Ltd., Suwon-si, Gyeonggi-Do (KR)
(72) Inventor: Lee, Si-Hyoung, Dongan-gu Anyang-si Gyeonggi-do (KR); Park, Nam-Choon, Banghwa-dong Gangseo-gu Seoul (KR); Kang, Jung-Won, Yangcheon-gu Seoul (KR); Park, Yi-Sak, Yeongdeungpo-gu Seoul (KR); Kim, Ji-Hoon, Gangnam-gu Seoul (KR); Shin, So-Young, Hanam-si Gyeonggi-do (KR)
(74) Representative: Lang, Johannes

(57) **Abstract**

An apparatus and method for controlling a user interface using a jog dial (100) and a navigation key (200) are provided. The method includes navigating a main menu by a jog dial (100) and navigating a submenu by a navigation key (200) in a menu structure having at least one step; and navigating the main menu without separate key input when movement of the jog dial (100) is sensed while navigating a submenu.

## Description

### BACKGROUND OF THE INVENTION

### Field of the Invention

The present invention relates to an apparatus and method for controlling a user interface using a jog dial and a navigation key, and more particularly, to an apparatus and method for controlling a user interface using a jog dial and a navigation key in which the jog dial and the navigation key are functionally differentiated in order to navigate menus having a hierarchical structure.

### Description of the Related Art

An image display device, such as a digital television (TV), a video cassette recorder (VCR), a digital disk recorder (DDR), a digital video recorder (DVR), a computer (PC), etc., generally has a user interface for displaying available menus. A user selects a desired operation from various menu items displayed through the user interface and commands the image display device to perform the desired operation.

Typically, a user pushes a button on the image display device, touches a liquid crystal display (LCD) screen, or uses a remote controller to input a desired command. A user command is sometimes also input by voice recognition. Of these user command input methods, the remote controller is the most frequently used since it can input a user command from a distance and wirelessly.

A cellular phone comprises an image display unit and a user command input unit.

The user command input unit comprises number keys 0 to 9 arranged in matrix form, a power key, a four-way key (navigation key), and may further comprises a circular jog dial.

The navigation key is configured to move through a menu in four ways (up, down, right and left), and the jog dial is useful for rapidly navigating through data arranged vertically or horizontally. While the navigation key and the jog dial have different shapes, the function they perform in, for example, the user interface is essentially the same. That is, they are both basically used to navigate vertical and horizontal menus, and they may be used separately or together. However, not all interfacing operations can be performed by manipulating only the navigation key and the jog dial when they are used to control movement through menus.

For example, if the user interface has a hierarchical structure in which submenus are embedded within menus, either the navigation key or the jog dial can be used to navigate a main menu, select an item from the main menu, and navigate a corresponding submenu. However, it is difficult to move from a submenu corresponding to a selected item from a main menu to a submenu corresponding to another item from the main menu by using only either the navigation key or the jog dial. In such an instance, a separate key, such as a cancel button or a menu key, would be used to return to the main menu and select the other menu item by using the navigation key or the jog dial.

For the foregoing reason, there is need for a more efficient user interface in which the navigation key and the jog dial are functionally differentiated.

### SUMMARY OF THE INVENTION

It is an objective of the present invention to provide an apparatus and method for controlling a user interface in which a navigation key and a jog dial are functionally differentiated so that one navigates main menus and the other navigates submenus.

According to an exemplary embodiment of the present invention, there is provided a method for controlling a user interface, comprising: navigating one of a main menu and a submenu depending on which one of a jog dial and a navigation key is manipulated by a user in a menu structure having at least one step.

The main menu may be navigated by the jog dial and the submenu may be navigated by the navigation key, and the main menu may be navigated without separate key input when movement of the jog dial is sensed while navigating the submenu.

The user interface controlling method may further comprise: when a confirmation key is input to change a reference step, sequentially increasing the main menu, serving as the reference step, and the submenu; and performing menu navigation according to the changed reference step when movement of the jog dial or the navigation key is sensed.

When at least one application having a submenu is displayed on a single screen, the applications may be navigated by the jog dial and the submenu may be navigated by the navigation key.

According to another exemplary embodiment of the present invention, there is provided a method for controlling a user interface, comprising: navigating a main menu by a jog dial and navigating a submenu by a navigation key in a menu structure having at least one step; navigating the main menu without separate key input when movement of the jog dial is sensed while navigating the submenu; and when a confirmation key is input to change a reference step, sequentially increasing the main menu, serving as the reference step, and the submenu, and performing menu navigation according to the changed reference step when movement of the jog dial or the navigation key is sensed.

According to yet another exemplary embodiment of the present invention, there is provided a method for controlling a user interface which provides a display screen on which at least one application is processed, comprising: navigating the applications by a jog dial and navigating a submenu of each application by a navigation key; and navigating the applications without separate key input when movement of the jog dial is sensed while navigating the submenu.

According to yet another exemplary embodiment of the present invention, there is provided an apparatus for controlling a user interface, comprising: a key input sensing unit for sensing at least one key input for selecting a menu; and a controller for navigating one of a main menu and a submenu depending on a kind of the sensed key.

The controller may navigate the main menu when movement of a jog dial is input and navigate the submenu when movement of a navigation key is input, and the controller may navigate the main menu without separate key input when movement of the jog dial is sensed while navigating the submenu.

When a confirmation key is input to change a reference step, the controller may sequentially increase the main menu, serving as the reference step, and the submenu, and sense the movement of the jog dial and the navigation key to navigate a menu according to the changed reference step.

When at least one application having a submenu is displayed on a single screen, the controller may navigate the applications by the jog dial and navigate the submenu by the navigation key.

According to yet another exemplary embodiment of the present invention, there is provided an apparatus for controlling a user interface, comprising: a key input sensing unit for sensing at least one key input for selecting a menu; and a controller for navigating a main menu when movement of a jog dial is input and navigating a submenu when movement of a navigation key is input, navigating the main menu without separate key input when movement of the jog dial is sensed while navigating the submenu, and when a confirmation key is input to change a reference step, sequentially increasing the main menu, serving as the reference step, and the submenu, and sensing movement of the jog dial and the navigation key to perform menu navigation according to the changed reference step.

According to yet another exemplary embodiment of the present invention, there is provided an apparatus for controlling a user interface which provides a display screen on which at least one application is processed, comprising: a key input sensing unit for sensing at least one key input for navigation of the applications or navigation of a submenu of each application; and a controller for navigating the applications by a jog dial and navigating the submenu of an application by a navigation key, and navigating the applications without separate key input when movement of the jog dial is sensed while navigating the submenus.

According to yet another exemplary embodiment of the present invention, there is provided a set-top box which provides a user interface of a menu structure having at least one step, comprising: the user interface in which at least one key input for selecting a menu item is sensed and a main menu or a submenu is navigated depending on a the characteristics of the sensed key input.

The main menu may be navigated when movement of a jog dial is input, and the submenu may be navigated when movement of a navigation key is input, and the main menu may be navigated without separate key input when movement of the jog dial is sensed while the submenu is being navigated.

When a confirmation key is input to change a reference step, the main menu, serving as the reference step, and the submenu may be sequentially increased, and menu navigation may be performed according to the changed reference step when movement of the jog dial or the navigation key is sensed.

According to yet another exemplary embodiment of the present invention, there is provided a mobile terminal which provides a user interface of a menu structure having at least one step, comprising: the user interface in which at least one key input for selecting a menu is sensed and a main menu or a submenu is navigated depending on a kind of the sensed key input.

### BRIEF DESCRIPTION OF THE DRAWINGS

A more complete appreciation of the invention, and many of the attendant advantages thereof, will be readily apparent as the same becomes better understood by reference to the following detailed description when considered in conjunction with the accompanying drawings in which like reference symbols indicate the same or similar components, wherein:
FIG. 1A is a plan view illustrating a remote controller having a jog dial and a navigation key, according to an exemplary embodiment of the present invention;
FIG. 1B is a plan view illustrating a mobile terminal having a jog dial and a navigation key, according to an exemplary embodiment of the present invention;
FIG. 2A shows movement between applications using the jog dial, according to the present invention;
FIG. 2B shows movement through submenus within an application using the navigation key according to the present invention;
FIGS. 3A-3C show movement between applications and submenus on a screen of a digital T,V according to the present invention;
FIGS. 4A-4D show movement through applications and displaying of titles of various submenus in a hierarchical menu structure assigned to each application, according to the present invention;
FIG. 5 is a block diagram of a user interface control apparatus, according to the present invention;
FIG. 6 shows a hierarchical menu structure, according to the present invention; and
FIG. 7 is a flowchart illustrating operation of the jog dial and the navigation key in the hierarchical menu structure, according to the present invention.

### DETAILED DESCRIPTION OF EXEMPLARY EMBODIMENTS

The present invention will now be described more fully with reference to the accompanying drawings, in which exemplary embodiments of the invention are shown. This invention may, however, be embodied in different forms and should not be construed as limited to the exemplary embodiments set forth herein. Rather, these exemplary embodiments are provided so that this disclosure will be thorough and complete, and will fully convey the scope of the invention to those skilled in the art.

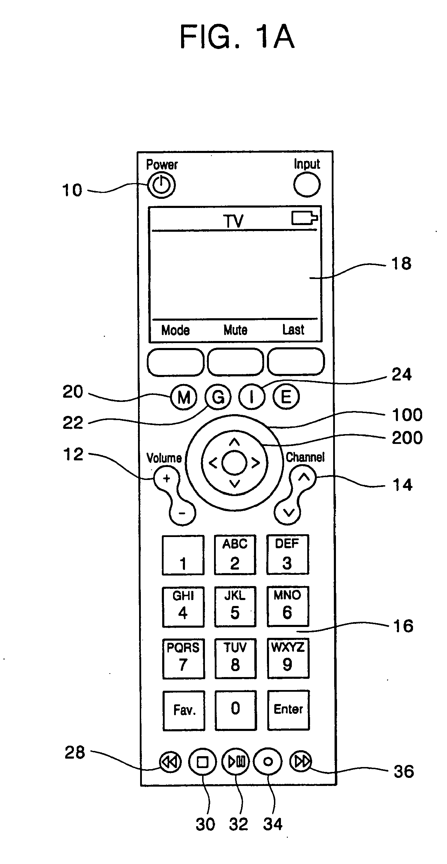

FIG. 1A is a plan view illustrating a remote controller having a jog dial and a navigation key according to an exemplary embodiment of the present invention.

The remote controller is typically used to control functions of home electronics such as a TV, an air conditioner, and a DVD player, and has recently been used to control a set-top box which is being developed as a home gateway performing multiple functions such as broadcasting, communication, and networking. The remote controller of FIG. 1A is used to control such home electronics, such as a multi-function set-top box (not shown).

The remote controller of FIG. 1A basically comprises a power button 10, a volume control button 11, a channel changing button 14, and matrix key pad 16 having number keys 0 to 9. The remote controller further comprises an LCD screen 18 for displaying an image, a menu button 20, a guide button 22, an information button 24 and an execution key 26. The remote controller further comprises a rewind button 28, a stop button 30, a play/pause button 32, a record button 34 and a fast forward button 36.

Further, the remote controller comprises a circular jog dial 100 and a navigation key 200. The jog dial 100 is rotated clockwise or counterclockwise to navigate a main menu displayed on screen 18 and a display screen (not shown) of a television connected to the set-top box. The navigation key 200 comprises up and down direction keys which are manipulated to navigate vertically through a submenu and right and left keys to navigate horizontally through a submenu.

In the present invention, the jog dial 100 and the navigation key 200 are functionally differentiated. In a hierarchical menu structure, the jog dial 100 is used to navigate main menus, and the navigation key 200 is used to navigate submenus. When a plurality of applications are displayed on a single screen, movement between the applications is controlled by the jog dial 100 and movement through a submenu within an application is controlled by the navigation key 200.

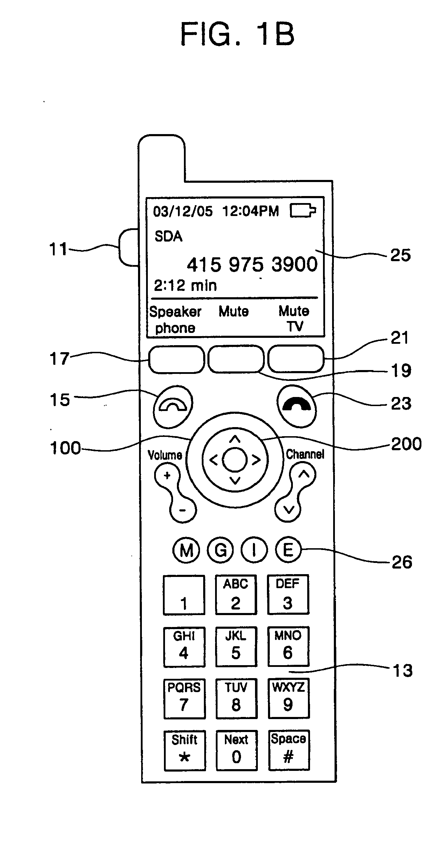

FIG. 1B is a plan view illustrating a mobile terminal having a jog dial and a navigation key according to an exemplary embodiment of the present invention. The mobile terminal of FIG. 1B has a different configuration from the remote controller of FIG. 1A which inputs user commands to the set-top box. In the mobile terminal of FIG. 1B, the user interface for inputting user commands is integrated into a body for performing a call function.

The mobile terminal of FIG. 1B basically comprises a power button 11, a key pad 13 having number keys 0 to 9, a call button 15, a speaker button 17, a mute button 19 for muting the mobile terminal, a mute button 21 for muting another electronic device, such as a television, and a call end button 23. The mobile terminal further comprises a display unit 25 for displaying a call status or a radio environment status, etc.

The jog dial 100 and the navigation key 200 of FIG. 1B function the same as in FIG. 1A to navigate and select from menus displayed on the display screen.

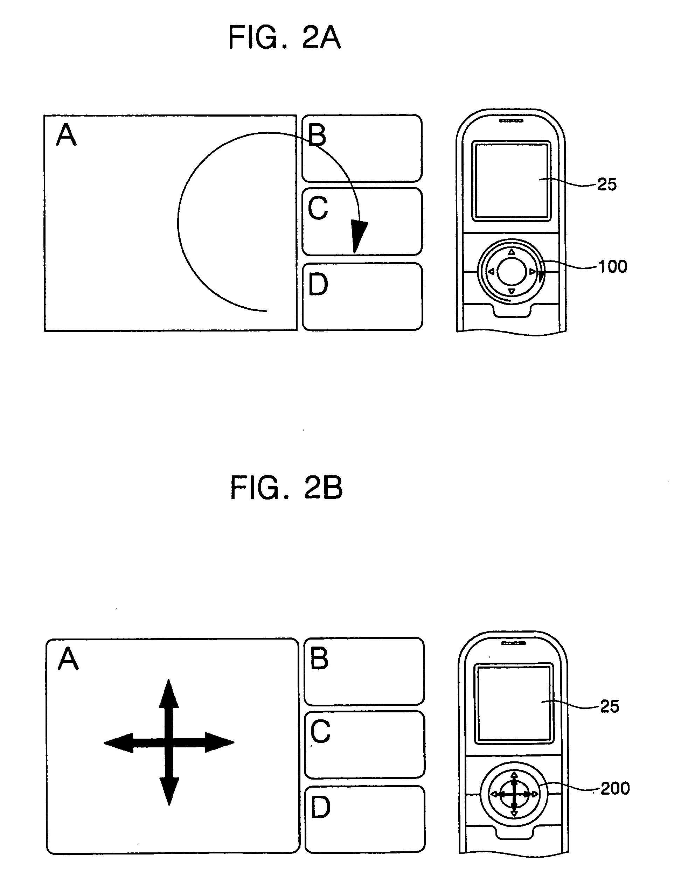

FIG. 2A shows movement between applications using the jog dial 100 according to the present invention. A screen 25 of the mobile terminal is divided into four portions A, B, C, and D. The display screen (not shown) of the television connected to the set-top box displays the same image as displayed on screen 25. When a user turns the jog dial 100, applications are selected one-by-one in the order of A, B, C, and D.

FIG. 2B shows movement through a submenu within a selected application using the navigation key 200 according to the present invention. When an application is selected and the user pushes a direction key of the navigation key 200, movement in a corresponding direction (up, down, right, and left) through a submenu of the selected application is performed.

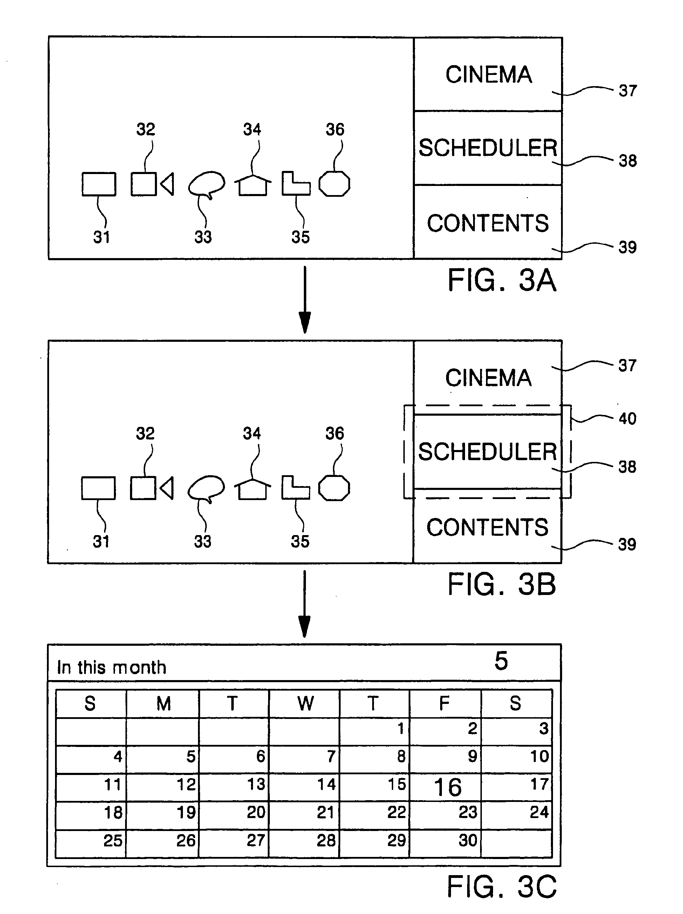

FIG. 3A shows movement between applications on a screen of a digital TV according to the present invention. A portal screen having a menu containing various selections such as "TV" 31, "Entertainment" 32, "Communication" 33, "Home View" 34, "Internet" 35 and "Setting" 36 is displayed on the main screen of the digital TV, and frequently selected applications such as "Cinema" 37, "Scheduler" 38, and "Contents" 39 are respectively displayed on the main screen as three sub-screens arranged on the right of the portal screen..

When the user turns the jog dial 100 clockwise, an application is selected in order of "Cinema", "Scheduler", and "Contents". In FIG. 3B the selection of "Scheduler" 38 is illustrated by dashed lined box 40.

When the user manipulates the navigation key 200 after "Scheduler" 38 is selected, in this example, a calender of the current month, such as May, is displayed on the main screen as shown in FIG. 3C. The user may manipulate any of the direction keys (up, down, right, and left) of the navigation key 200 to move through the dates of the month. Each selected date may be highlighted in any known method as the user moves up, down, right or left through dates (submenu items). FIG. 3C illustrates one method by enlarging the number of the selected date.

The user does need to manipulate a separate key to change from navigating the submenu of the currently selected application to navigating the applications. In this case, the user can select a newly desired application by just turning the jog dial in the direction of the desired application. For example, should the user manipulate the jog dial 100 clockwise, full screen again displays the image as shown in FIG. 3A, an the next application is highlighted, such as "Contents" 39.

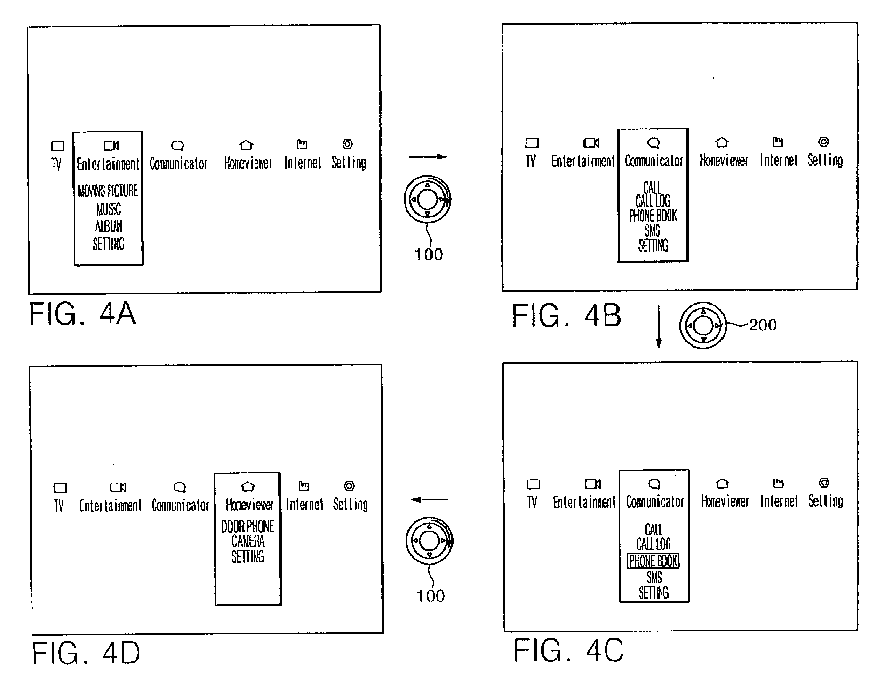

FIGS. 4A-4D show movement through applications and displaying of titles of various submenus in a hierarchical menu structure assigned to each application when the portal screen in FIG. 3A is selected, according to the present invention. Such hierarchical menu structure can be any known type, such as a drop down menu structure.

When the portal screen of FIG. 3A is selected, the full screen displays all executable applications (e.g., TV, Entertainment, Communication, Home view, Internet, and Setting) that were displayed on the portal screen, as shown in FIG. 4A. In this case, the applications can then be navigated using the left and right directions keys of the navigation key 200.

FIG. 4A shows that "Entertainment" is selected. "Entertainment" has a drop down menu illustrating submenus "Moving picture", "Music", "Album", and "Setting" assigned thereto. In FIG. 4A, nothing is selected from the submenu of "Entertainment". This means that the up and down direction keys of navigation key 200 were not used. In this state, when the jog dial is turned clockwise, movement to the next application, "Communicator" is performed as shown in the screen in FIG. 4B.

"Communicator" has a drop down menu illustrating submenus "Call, "Call log", "Phone Book", "SMS", and "Setting" assigned thereto. Since only the jog dial 100 has been turned and movement of the navigation key 200 is not sensed, none of submenus are selected. In this state, when a down direction key of the navigation key 200 is selected, individual ones of the submenus become highlighted. FIG. 4C shows that the submenu "Phone Book" has been highlighted.

That is, FIG. 4C shows that the down key of the navigation key 200 has been selected three times so that "Phonebook" is selected from the submenu of "Communicator". At this time, when the user does not execute "Phone Book" by manipulation of, for example, execution key 26 of Fig. 1A, but desires to return to the main menu instead, the user need only turn the jog dial 100. That is, the user can return to navigation of the main menu of FIG. 3A just by turning the jog dial 100, without the need to use a separate key, and thus menu navigation is easier than the conventional method.

A screen in FIG. 4D is displayed by manipulating the right direction key of the navigation key 200, if the screen in FIG. 4C is displayed. In this case, "Home view" is selected as the next selectable application after "Communicator", and "Home view" has selectable submenus "Door phone", "Camera", and "Setting" assigned to a drop down menu thereof. The user may then select any of the submenus by manipulating the up or down direction keys of the navigation key 200.

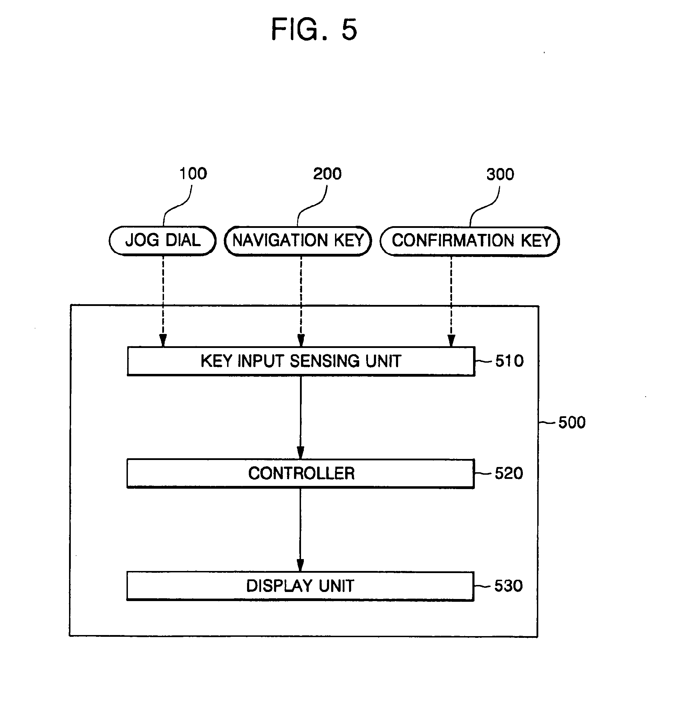

FIG. 5 is a block diagram illustrating a user interface control apparatus according to the present invention.

The user interface control apparatus 500 of FIG. 5 comprises a key input sensing unit 510, a controller 520, and a display unit 530.

The key input sensing unit 510 senses among other key inputs, a key input of the jog dial 100, a key input of the navigation key 200, and a key input of a confirmation key 300, and reports the sensing result to the controller 520.

The controller 520 navigates menus depending on the characteristics of the sensed key. The controller 520 navigates a main menu when the jog dial is input and navigates a submenu when the navigation key is input. The controller 520 stops movement between items of a submenu and causes a menu mode to return to navigation of the main menu when the jog dial is turned while navigating a submenu.

The confirmation key is used to change a reference step, which is a step to which the main menu navigated by the jog dial belongs. For example, in a menu structure having five (5) steps, a first step which is the highest-level menu step is the reference step at the initial stage of menu navigation. That is, at the initial stage of menu movement, the first step is the main menu step, and the second step is the submenu step. In this state, when the confirmation key is input once, the second step becomes the reference step, so that the second step becomes the main menu step and the third step becomes the submenu step. Even very complicated menu structures can be navigated using the jog dial and the navigation key in the above-described way.

The display unit 530 emphasizes and displays a menu item or an application selected by the controller 520. Here, the selected menu item or application is emphasized by, for example, having the selected menu item turned over or its letter size enlarged compared to other menus, and the selected application is displayed on a larger screen than other applications.

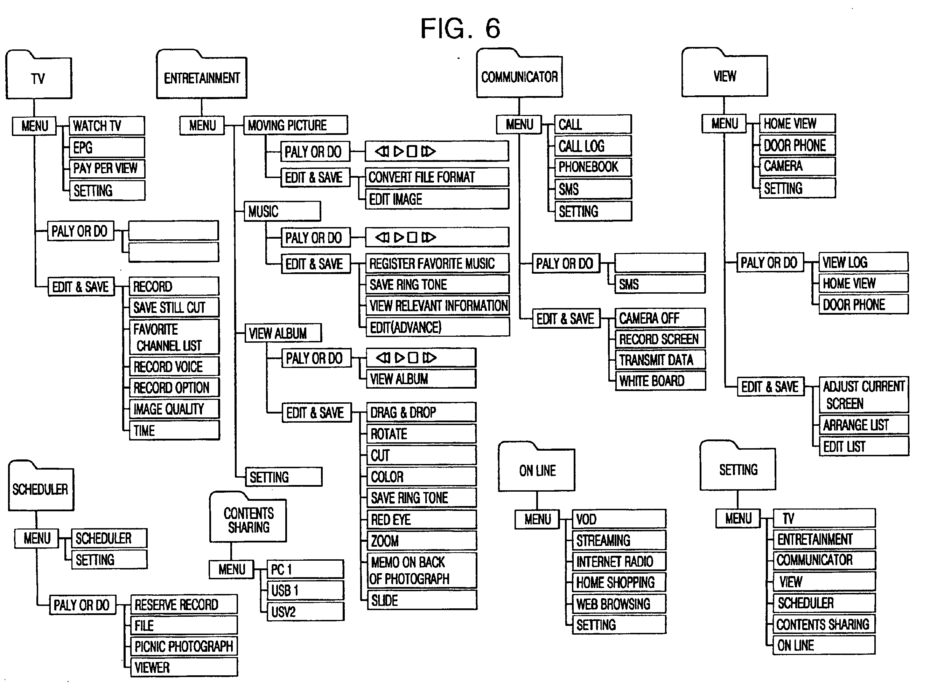

FIG. 6 shows a hierarchical menu structure of submenus of various applications, according to the present invention, when the feature of using frequently selected applications as described with respect to FIGS 3A-3C is not utilized. In this case, all the selectable applications will be displayed on the full screen.

The menu structure of FIG. 6 comprises a maximum of four steps. In the first step, a highest-level menu including "TV", "Entertainment", "Communicator", "View, "Scheduler", "Contents Sharing", "On line", and "Setting" is provided. In the second step, a four-item submenu of, for example "Entertainment" including "Moving picture", "Music", "Album", and "Setting" are provided.

At the initial stage of menu navigation, the user selects from among the first step menu by using the jog dial 100 to search for a desired application. When the user desires to call a friend, "Communication" is first selected by using the jog dial. A new menu, such as a drop down menu is then displayed. The user then selects, by using the directions keys of navigation key 200, the submenu "Phonebook". A phone book is displayed by manipulating execution key 26 to allow a user to search for a telephone number. Once a desired phone number is found and selected by use of the navigation keys, "Call" is selected using call key 15 to call the friend.

If the user desires to move to "Scheduler" while searching for his/her friend's telephone number from the phonebook, the user can move to "Scheduler" by turning the jog dial 100 Since the current main menu is "Communicator", "Scheduler" can be selected by turning the jog dial two steps clockwise. Even though the menu structure is hierarchical, there is no need for a separate procedure for changing a menu mode from a submenu mode to a main menu mode as such can be accomplished just by turning the jog dial.

Movement between the third step menu and the fourth step menu can be performed in the same way as movement between the first step menu and the second step menu by using the confirmation key 300. For example, when the user desires to select "Edit&Save" from the submenu of "View Album" belonging to "Entertainment", "Entertainment" is selected by using the jog dial, and then "View Album" which is the second step menu is selected by using the navigation key. In this state, when the confirmation key 300 is pushed. In this state, when the confirmation key 300 is pushed, the second step becomes the reference step, whereby the jog dial navigates the reference step (second step menu) and the navigation key navigates 300 the third step menu. Thus, one the confirmation key 300 is pushed and the "View Album" becomes the reference step, user can move to "Edit&Save" by using the jog dial 100, then the user can navigate the "Edit&Save" menu by using and the navigation key 200, to move to "Color".

The confirmation key is used to change a reference menu, and any key performing a similar function may be substituted for the confirmation key within the spirit and scope of the present invention.

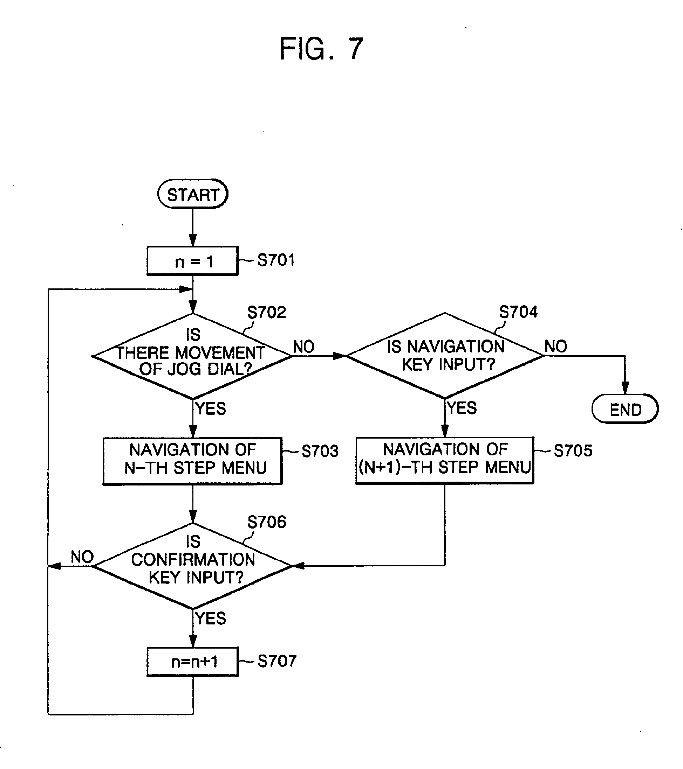

FIG. 7 is a flowchart illustrating operation of the jog dial and the navigation key in the hierarchical menu structure according to the present invention.

In FIG. 7, it is assumed that menu items which represent applications and supplemental functions thereof have a hierarchical structure, and "n" is a step variable which represents each menu step.

At the initial stage of menu movement, a step variable n is set to 1 (step S701). In this state, it is checked whether or not there is movement of the jog dial which navigates the main menu (step S702). When there is movement of the jog dial, navigation of n-th step menus which depend on the step variable n is performed (step S703). When a navigation key other than the jog dial is input (step S704), an (n+1)-th step menu is navigated (step S705). While navigating the (n+1)-th step menu by using the navigation key, when movement of the jog dial is sensed (step S702), the n-th step menu is again navigated (step S703). No separate key input is needed in order to return from the submenu to the main menu as this can be accomplished by just turning the jog dial.

In cases where menus of the user interface comprise more than two steps, menu navigation can be performed centering on the reference menu. When the step variable n is set to "1", the jog dial navigates the first step menu and the navigation key navigates the second step menu. That is, the reference step is the first step. When the user desires to move to the third and fourth step menus which are lower than the second step menu, the reference step can be additionally set by pushing a separate key (i.e., the confirmation key). That is, when the reference step is the second step, the jog dial navigates the second step menu and the navigation key navigates the third step menu. In order to enter the fourth and fifth steps, the reference step can be additionally set by pushing the confirmation key.

Referring to FIG. 7, whenever the confirmation key is input (step S706), the step variable n is increased by "1", thus n = n+1, (step S707) and the reference step is changed so that menu navigation can be smoothly performed by using the jog dial and the navigation key.

According to the present invention, the jog dial navigates the main menu and the navigation key navigates the submenu. And when a plurality of applications are provided on a screen, movement between the applications is controlled by the jog dial and movement between submenus of the applications is controlled by the navigation key.

As described above, the jog dial navigates the main menus and the navigation key navigates the submenus, and a main menu can be selected directly while navigating a submenu. This enables rapid menu navigation. Further, the reference step which is a reference of operations of the jog dial and the navigation key is set by using the separate confirmation key, and thus the user interface can be more efficiently configured to navigate a hierarchical menu structure of more than two steps.

While the present invention has been described with reference to exemplary embodiments thereof, it will be understood by those skilled in the art that various changes in form and detail may be made therein without departing from the scope of the present invention as defined by the following claims.

## Claims

1. A method for controlling a user interface, comprising:
navigating one of a main menu and a submenu depending on which one of a jog dial and a navigation key is manipulated by a user in a menu structure
having at least one step.

2. The method of claim 1, wherein the main menu is navigated by the jog dial and the submenu is navigated by the navigation key.

3. The method of claim 2, wherein the main menu is navigated without separate key input, when movement of the jog dial is sensed while navigating the submenu.

4. The method of claim 2, further comprising: when a confirmation key is input to change a reference step, sequentially increasing the main menu, serving as the reference step, and the submenu; and performing menu navigation according to the changed reference step when the movement of the jog dial or the navigation key is sensed.

5. The method of claim 1, wherein when at least one application having a submenu is displayed on a single screen, the applications are navigated by the jog dial and the submenu is navigated by the navigation key.

6. A method for controlling a user interface, comprising:
navigating a main menu by a jog dial and navigating a submenu by a navigation key in a menu structure having at least one step;
navigating the main menu without separate key input when movement of
the jog dial is sensed while navigating the submenu; and
when a confirmation key is input to change a reference step, sequentially increasing the main menu, serving as the reference step, and the submenu, and performing menu navigation according to the changed reference step when the movement of the jog dial or the navigation key is sensed.

7. A method for controlling a user interface which provides a display screen on which at least one application is processed, comprising:
navigating the applications by a jog dial and navigating a submenu of each application by a navigation key; and
navigating the applications without separate key input when movement of the jog dial is sensed while navigating the submenu.

8. An apparatus for controlling a user interface, comprising:
a key input sensing unit for sensing at least one key input for selecting a menu; and
a controller for navigating one of a main menu and a submenu depending on a kind of the sensed key.

9. The apparatus of claim 8, wherein the controller navigates the main menu when movement of a jog dial is input and navigates the submenu when movement of a navigation key is input.

10. The apparatus of claim 9, wherein the controller navigates the main menu without separate key input when the movement of the jog dial is sensed while navigating the submenu.

11. The apparatus of claim 9, wherein when a confirmation key is input to change a reference step, the controller sequentially increases the main menu, serving as the reference step, and the submenu, and senses movement of the jog dial and the navigation key to navigate a menu according to the changed reference step.

12. The apparatus of claim 8, wherein when at least one application having a submenu is displayed on a single screen, the controller navigates the applications by the jog dial and navigates the submenu by the navigation key.

13. An apparatus for controlling a user interface, comprising:
a key input sensing unit for sensing at least one key input for selecting a
menu; and
a controller for navigating a main menu when movement of a jog dial is input and navigating a submenu when movement of a navigation key is input; navigating the main menu without separate key input when movement of the jog dial is sensed while navigating the submenu; and when a confirmation key is input to change a reference step, sequentially increasing the main menu, serving as the reference step, and the submenu, and sensing movement of the jog dial and the navigation key to perform menu navigation according to the changed reference step.

14. An apparatus for controlling a user interface which provides a display screen on which at least one application is processed, comprising:
a key input sensing unit for sensing at least one key input for navigation of the applications or navigation of a submenu of each application; and
a controller for navigating the applications by a jog dial and navigating the submenu of the application by a navigation key, and navigating the applications without separate key input when movement of the jog dial is sensed
while navigating the submenus.

15. A set-top box which provides a user interface of a menu structure having at least one step, comprising:
the user interface in which at least one key input for selecting a menu item is sensed and a main menu or a submenu is navigated depending on a kind
of the sensed key input.

16. The set-top box of claim 15, wherein the main menu is navigated when movement of a jog dial is input, and the submenu is navigated when movement of a navigation key is input.

17. The set-top box of claim 16, wherein the main menu is navigated without separate key input when the movement of the jog dial is sensed while the submenu is being navigated.

18. The set-top box of claim 16, wherein when a confirmation key is input to change a reference step, the main menu, serving as the reference step, and the submenu are sequentially increased, and menu navigation is performed according to the changed reference step when the movement of the jog dial or the navigation key is sensed.

19. A mobile terminal which provides a user interface of a menu structure having at least one step, comprising:
the user interface in which at least one key input for selecting a menu is sensed and a main menu or a submenu is navigated depending on a kind of the sensed key input.

20. The mobile terminal of claim 19, wherein the main menu is navigated when movement of a jog dial is input, and the submenu is navigated when movement of a navigation key is input.

21. The mobile terminal of claim 20, wherein the main menu is navigated without separate key input when the movement of the jog dial is sensed while the submenu is being navigated.

22. The mobile terminal of claim 20, wherein when a confirmation key is input to change a reference step, the main menu, serving as the reference step, and the submenu are sequentially increased, and menu navigation is performed according to the changed reference step when the movement of the jog dial or the navigation key is sensed.
